# EUROPEAN PATENT SPECIFICATION

(11) **EP 1 730 887 B1**
(45) Date of publication and mention of the grant of the patent: **06.06.2012**
(21) Application number: 05733142.3
(22) Date of filing: 30.03.2005
(51) Int. Cl.: H04L 12/24

(54) **SWITCHING FABRIC DISCOVERY PROTOCOL**
KOPPELFELD-DISCOVERY-PROTOKOLL
PROTOCOLE DE DECOUVERTE DE TISSU DE COMMUTATION

(30) Priority: 31.03.2004 US 816253
(43) Date of publication of application: 13.12.2006
(73) Proprietor: Intel Corporation, Santa Clara, CA 95052 (US)
(72) Inventor: GENOVKER, Victoria, V., Phoenix, AZ 85044 (US); MCQUEEN, Ward, Chandler, AZ 85248 (US); ROOHOLAMINI, Mo, Gilbert, AZ 85296 (US); SULLIVAN, Mark, Tempe, AZ 85282 (US)
(74) Representative: Harrison Goddard Foote
(86) International application number: PCT/US2005/010711
(87) International publication number: WO 2005/099171

(56) References cited:
- US-A1- 2004 059 781
- US-B1- 6 546 507
- US-B1- 6 584 109

## Description

### BACKGROUND

A modular communications platform (MCP) may comprise a system of interoperable hardware and software building blocks that may be configured to support a number of different applications. The configurable nature of a MCP system may, however, make it difficult to determine the current configuration of a MCP system. US6584109B1 discloses a network repeater having automatic switching speed capability.

### BRIEF DESCRIPTION OF THE DRAWINGS

FIG. 1 illustrates a block diagram of a system 100.

FIG. 2 illustrates a block diagram of a system 200.

FIG. 3 illustrates a block flow diagram for a processing logic 300.

FIG. 4 illustrates a block flow diagram for a processing logic 400.

### DESCRIPTION OF SPECIFIC EMBODIMENTS

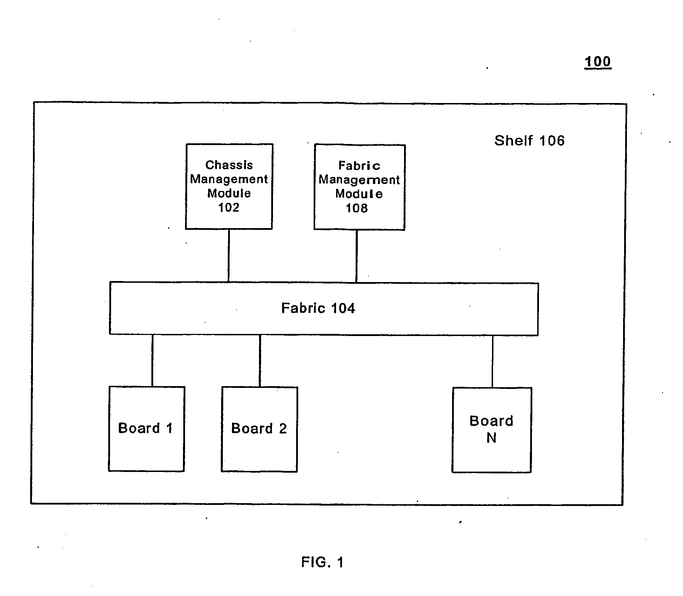

FIG. 1 illustrates a block diagram for a system 100. System 100 may comprise, for example, a MCP system 100. MCP system 100 may be designed using a number of modular building blocks, such as shelves, compute boards, management modules, Field Replaceable Units (FRU), operating systems, middleware, and other components. In one embodiment, for example, MCP system 100 may comprise an Advanced Telecommunications Computing Architecture (ATCA) system as defined by the PCI Industrial Computer Manufacturers Group (PICMG) 3.x family of specifications, such as the ATCA specification PICMG 3.0, dated December 30, 2002 ("ATCA Specification").

In one embodiment, one or more elements of MCP system 100 may also be configured to operate in accordance with the Advanced Switching (AS) family of specifications, such as the AS Core Architecture Specification, Revision 1.0, December 2003 ("AS Specification"). In general, the AS Specification defines a switching fabric architecture that supports High Availability capabilities such as hot add/remove, redundant pathways, and fabric management failover. The AS fabric architecture may support direct communication between various AS endpoint devices. The AS fabric architecture may provide a scalable and extensible packet switching fabric solution to facilitate the tunneling of any number of transport, network, or link layer protocols. These features enable an AS fabric to deliver a unified backplane solution for load/store and message based communications.

In one embodiment, MCP system 100 may be implemented as one or more network nodes in any number of wired or wireless communication systems. Examples a network node may include communication infrastructure equipment, such as a Radio Network Controller (RNC), Serving GPRS Support Node (SGSN), Media Gateway (MG), a carrier grade telecom server, and so forth. The embodiments are not limited in this context.

In one embodiment, the network nodes of MCP system 100 may be connected by one or more types of communications media. Examples of communications media may include metal leads, semiconductor material, twisted-pair wire, co-axial cable, fiber optic, radio frequencies (RF) and so forth. The connection may be a physical connection or a logical connection.

In one embodiment, for example, MCP system 100 may comprise a RNC connected by one or more communications media comprising RF spectrum for a wireless network, such as a cellular or mobile system. In this case, the network nodes and/or networks shown in MCP system 100 may further comprise the devices and interfaces to convert signals carried from a wired communications medium to RF signals. Examples of such devices and interfaces may include omni-directional antennas and wireless RF transceivers. The embodiments are not limited in this context.

Referring again to FIG. 1, MCP system 100 may comprise a number of different elements, such as a chassis management module (CMM) 102, a communications fabric 104, boards 1-N, a shelf 106, and a fabric management module (FMM) 108. Although FIG. 1 shows a limited number of elements, it can be appreciated that MCP system 100 may comprise any number of additional elements desired for a given implementation. The embodiments are not limited in this context.

In one embodiment, MCP system 100 may comprise boards 1-N. Boards may comprise various network nodes implemented in a size and form factor compatible with the architecture for MCP system 100, such as an ATCA architecture as defined by the ATCA Specification, for example. Examples of boards 1-N may include a single board computer (SBC) with single or multiple processors, a router, a switch, a storage system, a network appliance, a private branch exchange (PBX), an application server, a computer/telephony (CT) appliance, and so forth. Each board may include a board interface to connect with a switching interface of communications fabric 104, and may communicate with other boards via communication fabric 104. In one embodiment, for example, boards 1-N may comprise one or more ATCA compliant boards, such as the Intel® NetStructure™ MPCBL0001 SBC made by Intel Corporation. It is worthy to note that boards 1-N may sometimes be referred to as "blades" due to the shape and size of boards 1-N.

In one embodiment, MCP system 100 may comprise communications fabric 104. Communications fabric 104 may comprise a switching fabric or backplane to enable communication between boards 1-N. Communications fabric 104 may be, for example, a layer 2 switching fabric comprising a communications circuit board having a plurality of switching interfaces, such as a base interface comprising a 10/100/1000 BASE-T Ethernet, a fabric interface comprising a Serializer/Deserializer ("SERDES") interface as defined by the PICMG 3.x subsidiary specifications, and so forth. Each switching interface may provide a common interconnect for boards 1-N connected thereto. The switching interfaces may be in electrical communication with each other and with, for example, a system management bus of communications fabric 104.

In one embodiment, each board 1-N connected to communications fabric 104 may communicate with other boards and system resources via communications fabric 104. Communications fabric 104 may have various topologies, ranging from a dual star topology to full mesh topology. In a dual star topology, each board 1-N has a pair of redundant fabric interfaces, one connected to each of the two redundant centralized switches. In a full mesh system, each board 1-N has a point-to-point connection to every other board 1-N, and each board has a board interface to connect the board to a switching interface for communications fabric 104. Redundant paths can be supported through these switches for failover, and the full mesh reduces the need for dedicated switch slots. The type of topology for communications fabric 104 is not limited in this context.

In one embodiment, communications fabric 104 and boards 1-N may communicate information in accordance with any number of communication protocols, such as a layer 2 communication protocol. For example, MCP system 100 may communicate information using a protocol defined by the Common Switch Interface Specification (CSIX) Forum titled "CSIX-L1: Common Switch Interface Specification-L1," version 1.0, dated 8/5/2000 ("CSIX Specification"), the Infiniband Trade Association document titled "Infiniband Architecture Specification Volume 1," release 0.8, dated December 1999 ("Infiniband Specification"), the Optical Internetworking Forum (OIF) document titled "System Packet Interface Level 3 (SPI-3): OC-48 System Interface for Physical and Link Layer Devices," dated June 2000 ("SPI-3 Specification"), the OIF document titled "System Packet Interface 4 (SPI-4) Phase 2: OC-192 System Interface for Physical and Link Layer Devices," OIF-SPI4-02.0, dated January 2001 ("SPI-4 Specification"), the PCI Express Base and Advanced Switching (ExB/AS) Specification, Review Draft Revision 0.5 ("ExB/AS Specification"), and the Rapid Input/Output Trade Association document titled "RapidIP Interconnect Specification Part VI: Physical Layer 1x/4x LP-Serial Specification," revision 1.1, dated December 2001 ("S-RIO Specification"). The embodiments are not limited in this context.

In one embodiment, MCP system 100 may comprise a shelf 106. Shelf 106 may comprise a chassis to house the other components of MCP system 100. Shelf 106 may also comprise various components to provide functionality to CMM 102, boards 1-N, and/or FMM 108 ("shelf components"). For example, shelf 106 may comprise shelf components such as power supplies, cooling fans, sensors and other shared components. In one embodiment, for example, shelf 106 may comprise an ATCA compliant shelf, such as the Intel NetStructure MPCHC0001 14U shelf made by Intel Corporation.

In one embodiment, MCP system 100 may comprise CMM 102. CMM 102 may perform centralized system management for MCP system 100. In one embodiment, for example, CMM 102 may comprise an ATCA compliant management module, such as the Intel NetStructure MPCMM0001 CMM. CMM 102 may attempt to improve service availability in a modular platform compliant with ATCA specifications, by offloading management applications from the host processor. CMM 102 may provide centralized shelf management by managing a plurality of board slots, multiple shelf sensors, and an optional redundant CMM. The CMM may query information from one or more FRU, detects presence, performs thermal management for shelf 106, and performs health monitoring for each component. It also provides power management and controls the power-up sequencing of each component and the power-on/off to each board slot. The CMM may support multiple management interfaces, including the Remote Management Control Protocol (RMCP), Remote Procedure Calls (RPC), Simple Network Management Protocol (SNMP) v1 and V3, Intelligent Platform Management Interface (IPMI) 1.5 over the Intelligent Platform Management Bus (IPMB), Command Line Interface (CLI) over serial port, Telnet, Secure Shell, and others. The embodiments are not limited in this context.

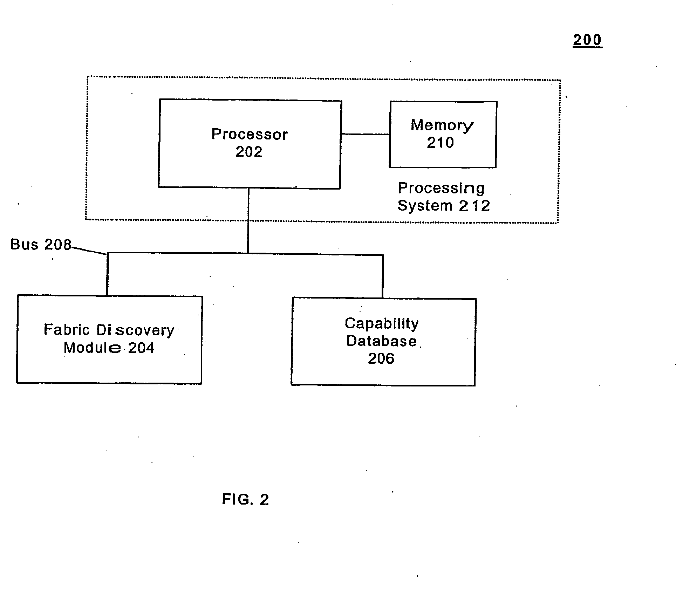

In one embodiment, MCP system 100 may comprise FMM 108. FMM 108 may perform fabric management operations for communications fabric 104. FMM 108 may perform, for example, fabric discovery in accordance with a fabric discovery algorithm. During fabric discovery, FMM 108 records which devices are connected to communications fabric 104, collects information about each device in the fabric, and constructs a connection table for the fabric. FMM 108 may be discussed in more detail with reference to FIG. 2.

In addition to the above, MCP system 100 may comprise other components typically found in a modular platform. For example, MCP system 100 may comprise one or more management buses. Bus 104 may communicate management control signals between boards 1-N and other components of MCP system 100, such as CMM 102 and FMM 108. In one embodiment, for example, bus 104 may comprise an ATCA compliant bus, such as a two-way redundant implementation of the IPMB, which is based on the inter-integrated circuit (I²C) bus and is part of the IPMI architecture. The embodiments are not limited in this context.

FIG. 2 illustrates a block diagram of a system 200. System 200 may be a fabric management module that is representative of, for example, FMM 108. As shown in FIG. 2, FMM 200 may comprise a fabric discovery module (FDM) 204, a capability database 206, and a processing system 212, all connected via a bus 208. Processing system 212 may further comprise a processor 202 and a memory 210. Although FIG. 2 shows a limited number of elements, it can be appreciated that any number of elements may be used in system 200.

In one embodiment, processing system 212 may comprise processor 202. Processor 202 may comprise any type of processor capable of providing the speed and functionality suitable for the embodiments. For example, processor 202 could be a processor made by Intel Corporation and others. Processor 202 may also comprise a digital signal processor (DSP) and accompanying architecture. Processor 202 may further comprise a dedicated processor such as a network processor, embedded processor, micro-controller, controller, input/output (I/O) processor (IOP), and so forth. The embodiments are not limited in this context.

In one embodiment, processing system 212 may comprise memory 210. Memory 210 may comprise a machine-readable medium and accompanying memory controllers or interfaces. The machine-readable medium may include any media capable of storing instructions and data adapted to be executed by processor 202. Some examples of such media include, but are not limited to, read-only memory (ROM), random-access memory (RAM), programmable ROM, erasable programmable ROM, electronically erasable programmable ROM, double data rate (DDR) memory, dynamic RAM (DRAM), synchronous DRAM (SDRAM), embedded flash memory, and any other media that may store digital information. The embodiments are not limited in this context.

In one embodiment, FMM 200 may comprise FDM 204. FDM 204 may perform discovery or enumeration operations for devices connected to communications fabric 104. Since MCP 100 is configurable, FDM 204 may perform discovery operations to determine the current configuration for MCP 100. FDM 204 may perform the discovery operations during the start up or "boot" process for MCP 100 and/or at periodic intervals. FDM 204 may also perform discovery operations in response to an external event, such as a user request, system request, "hot-swap" of a FRU or board 1-N, and so forth.

In one embodiment, FDM 204 may also generate a connection table during or after the discovery operation. FDM 204 may receive information from various components of MCP 100 (e.g., boards 1-N), and use the received information to generate a connection table for communications fabric 104. The connection table may provide a path or paths between every pair of devices connected to communications fabric 104. The path may represent various types of paths between the devices, such as the shortest path, a redundant path, and so forth. The embodiments are not limited in this context.

In one embodiment, FMM 200 may comprise a capability database 206. Capability database 206 may comprise a database or data structure to hold capability information about devices that are part of MCP 100, such as boards 1-N. Devices compliant with the AS Specification provide data structures similar to PCI capability registers to describe supported functionality. The first 256 bytes for the configuration space of an AS device are virtually identical to the configuration space for a PCI device, which categorizes the device. The unique set of features supported by a particular device can be extracted from a linked list of capabilities located in the configuration space for the device. The device may initialize the capabilities during power-up of the device. Each capability may have a corresponding unique capability identifier and a capability offset. The capability offset may be an offset to the next capability in the list of capabilities. An offset equal to 0 may indicate that the end of that capabilities list has been reached.

In general operation, FMM 200 may operate to perform fabric discovery for MCP 100. FDM 204 may locate or discover boards 1-N connected to communications fabric 104 via active ports analysis. FDM 204 may read the capabilities list for each located device, as well as write fabric specific information into certain capabilities from the list. FDM 204 may also read any tables referenced by the capabilities. The reads and writes may be accomplished using protocol interface (PI) 4 read packets and PI-4 write packets, respectively, as defined by the AS Specification. FDM 204 may update capability database 206 with the information read from each device. Once all devices connected to communications fabric 104 have been discovered, FDM 204 may create the connection table for communications fabric 104.

More particularly, FDM 204 first discovers the switch to which it is connected, which in this case is communications fabric 104. For each capability read, FDM 204 determines whether the capability references any tables, and if so sends PI-4 packets to read the tables. FDM 204 also determines whether it needs to update the capability table for the device stored in capability database 206 based on information found in the capability. FDM 204 then sends a PI-4 read packet to read the next capability. If all capabilities have been read for a particular device, a determination may be made as to whether the device is a switch or multi-ported endpoint. If the device is a switch or multi-ported endpoint, FDM 204 sends out packets on all active ports of that device, except for the port through which the device itself has been discovered, to find new devices. This may provide an example of the distributed nature of the fabric discovery algorithm, since FDM 204 discovers devices on all active ports in parallel rather than one port at a time in sequence.

FDM 204 may collect various types of information about each device. For example, the information for each device may include the number of physical ports on the device, the status indicating which ports are active, events supported by the device, and so forth. If a device is an endpoint, then FDM 204 may also gather information on which protocol interfaces that endpoint supports. If the device is a switch, then FDM 204 may read information associated with the multicast support for the switch.

FDM 204 may distinguish between new and already discovered devices using a unique serial number assigned to each device. FDM 204 may be configured to respond to three different types of cases. In a first case, a. serial number may not have been assigned to the device by the manufacturer. This may be denoted by, for example, a serial number comprising "0xFFFFFFFF. In this case, FDM 204 may write a fabric-unique serial number into the device and proceeds with discovering the device. In a second case, a serial number may have been assigned to the device by the manufacturer (e.g., a serial number other than "0xFFFFFFFF") and FDM 204 does not have a record associated with the device. In this case, FDM 204 has encountered a new device. FDM 204 creates a new record for the device and proceeds with discovering the device. In a third case, a serial number may have been assigned to the device by the manufacturer (e.g., a serial number other than "0xFFFFFFFF"), and FDM 204 does have a record associated with the device. In this case, FDM 204 has discovered an alternate path to an already discovered device. FDM 204 makes a note of this information in the record for the device, and stops discovering the device.

FDM 204 maintains a list of devices that are currently being discovered. When the list becomes empty, all reachable devices have been discovered. At this point, FDM 204 calculates shortest paths between every pair of devices in the fabric, which can be used later for peer-to-peer communications, for example. Any duplicate paths found during discovery could be utilized during the run time of the fabric for fault resiliency or for traffic engineering to relieve chronic congestion. With a path-routed AS fabric, the path between any two nodes is always unique. For efficiency and other reasons, some nodes might perform their own fabric discovery to collect information about the devices in the fabric.

FDM 204 may also be configured to update the appropriate devices during any multicast group changes, such as when a device has left or joined a group, or has changed its status (e.g., writer, listener, both) in the group. For AS fabrics, such as communications fabric 104, the devices requiring updates may include AS switches. FDM 204 may be configured to keep such updates to a minimum. FDM 204 may maintain a number of paths going through the ingress and egress switch ports for a given multicast group. Each time a member joins or leaves a group, or changes its status, FDM 204 performs a check of its tables in capability database 206 to determine if a multicast table for a given switch needs an update. Further, FDM 204 may build a spanning tree table of the fabric and use the spanning tree for the shortest paths between the devices. In this manner, FDM 204 may avoid a looping condition in multicast.

Operations for the above systems may be further described with reference to the following figures and accompanying examples. Some of the figures may include programming logic. Although such figures presented herein may include a particular programming logic, it can be appreciated that the programming logic merely provides an example of how the general functionality described herein can be implemented. Further, the given programming logic does not necessarily have to be executed in the order presented unless otherwise indicated. In addition, although the given programming logic may be described herein as being implemented in a specific system, node or module, it can be appreciated that the programming logic may be implemented anywhere within the system and still fall within the scope of the embodiments.

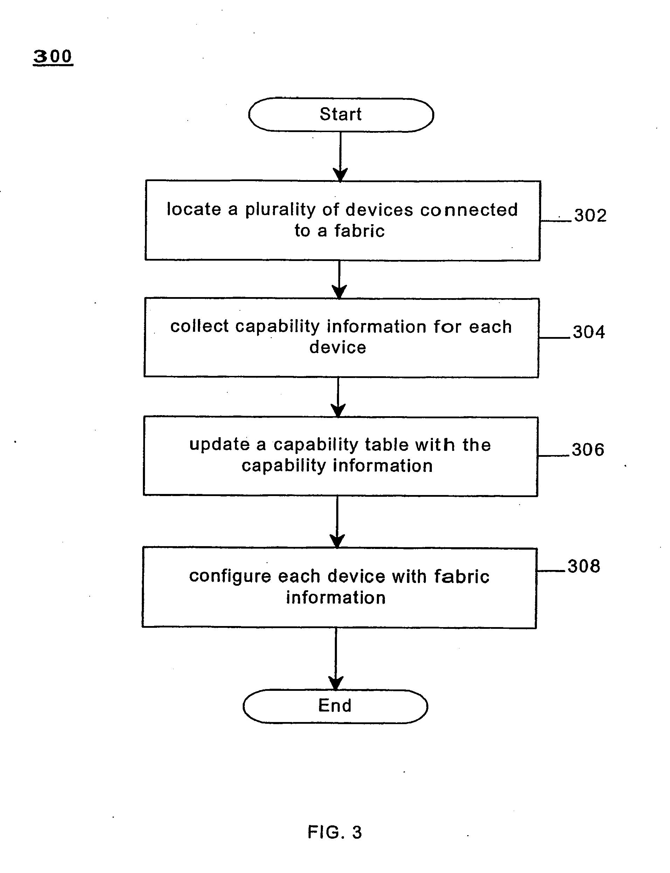

FIG. 3 illustrates a block flow diagram for a programming logic 300. FIG. 3 illustrates a programming logic 300 that may be representative of the operations executed by one or more systems described herein, such as FMM 200. As shown in programming logic 300, a plurality of devices connected to a fabric are located at block 302. Capability information for each device may be collected at block 304. For example, the capability information may be collected for a plurality of devices in parallel. A capability table may be updated with the capability information at block 306. Each device may be configured with fabric information at block 308. For example, at least one capability for the device may be configured with the fabric information.

In one embodiment, capability information may be collected by determining whether capability information for a device has already been collected. If the capability information for the device has not been collected, the capability information may be collected by reading a set of capabilities for the device. A determination may be made as to whether there are any reference tables associated with the capabilities. If there are any reference tables associated with the capabilities, the reference tables may be read.

Once all of the capabilities for a device have been read, a determination may be made as to whether the device connects to any other devices. If the device connects to other devices, the capabilities and associated reference tables for the other devices may be read.

Once capabilities information has been read for all devices connected to the fabric, a connection table may be generated for the plurality of devices. Information may be communicated between the devices using the fabric and connection table.

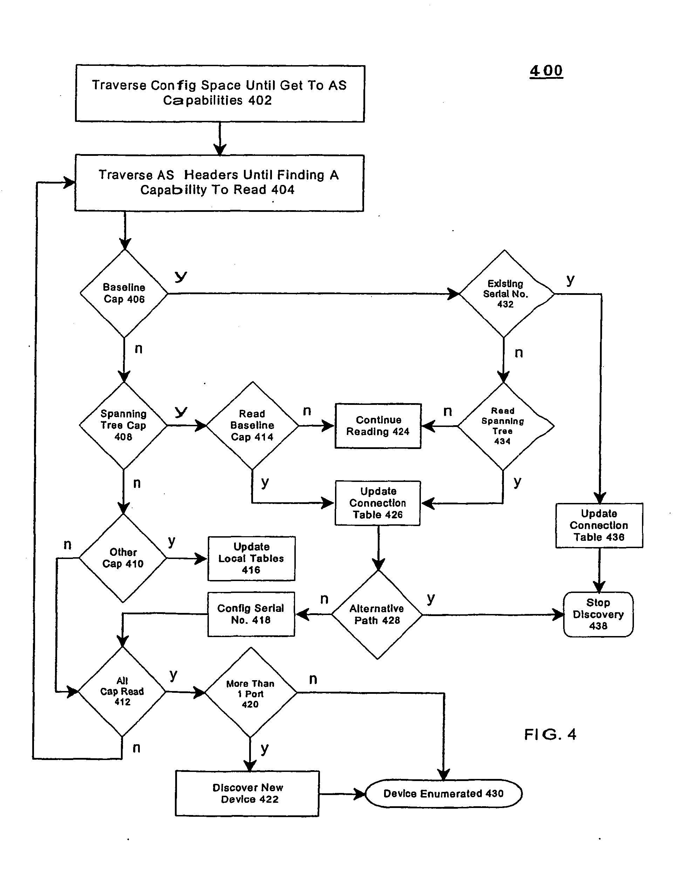

FIG. 4 illustrates a block flow diagram for a programming logic 400. Programming logic 400 may be representative of the operations executed by one or more systems described herein, such as FMM 200. More particularly, programming logic 400 illustrates a more detailed programming logic for FMM 200. It may be appreciated, however, that the embodiments are not limited to programming logic 400.

As shown in FIG. 4, FDM 204 may traverse the configuration space for a device until it gets to the AS capabilities list at block 402. As stated previously, AS devices provide capability structures similar to PCI capability registers to describe supported functionality. The first 256 bytes of an AS device's configuration space are identical to a PCI device's configuration space, which categorize the device. At address location 34h, there is a Capabilities Pointer, which points to the beginning of PCI records. One of the records in the list is the AS capability record, which points to the beginning of AS capabilities list. Block 402 accomplishes the task of finding the beginning of the AS capabilities list.

Once the beginning of the AS capabilities list is found at block 402, FDM 204 may traverse the AS headers until it finds a capability to read at block 404. FDM 204 reads the AS header attached to each capability to determine which capability it encountered using the capability identifier field in the AS header.

If the capability identifier corresponds to a baseline capability at block 406, then a determination may be made as to whether the serial number associated with the device exists in capability database 206 at block 432. If the serial number does exist, this means that FDM 204 has already found this device through an alternate path. The connection table may be updated at block 436, and discovery operations at this device may be terminated at block 43 8.

If the serial number does not exist at block 432, then FDM 204 may read entry zero (0) of the spanning tree table at block 434. If entry zero (0) has been already read, then the connection table may be updated at block 426 to reflect that the two ports are connected. If entry zero (0) has not been read, then the next capability is read at block 424, and control passes to block 404.

If the capability identifier found at block 404 does not correspond to a baseline capability at block 406, then a determination may be made as to whether the capability identifier corresponds to a spanning tree capability at block 408. If the capability identifier corresponds to a spanning tree capability at block 408, then FDM 204 needs to read the baseline capability of the device at block 414 to determine whether it found a new or existing device. If the baseline capability can be read at block 414, then the connection table may be updated at block 426, otherwise the next capability is read at block 424 and control is passed to block 404.

If the capability identifier found at block 404 does not correspond to a spanning tree capability at block 408, then FDM 204 needs to determine whether it found at least one of the capabilities (e.g., device PI, multicast routing table, events, and switch spanning tree) for which it needs to remember the offset, at block 410. If FDM 204 does find at least one needed capability at block 410, then FDM 204 may save the offset by updating the local tables at block 416, and proceed to read the next capability at block 404. If FDM 204 does not find at least one needed capability at block 410, then FDM 204 may determine whether it has read all the capabilities for the device at block 412. If all capabilities for the device have not been read at block 412, then control passes to block 404 to read the next capability. If all capabilities for the device have been read at block 412, then a determination is made as to whether the device has more than one (1) port at block 420. If the device has more than one (1) port at block 420, then FDM 204 starts discovering devices on all active ports of the device concurrently at block 422 by sending PI-4 read packets to each port of the device. The device is then marked as enumerated at block 430.

Once the connection table is updated at block 426, then a determination is made as to whether this device has been found through an alternative path at block 428. If a TurnPool value and TurnPointer value used to send read packets to this device do not equal a TurnPointer value and Forward TurnPool value located in entry zero (0) of the spanning tree table, then FDM 204 found the device through an alternate path. If this is the case, the discovery operation for the device is terminated at block 438. Otherwise, if the device has not been found through an alternative path at block 428 (e.g., the TurnPool and TurnPointer values are the same at block 428), then the device may be configured with a serial number if needed at block 418, and control passes to block 412.

Once the discovery or enumeration phase completes, FDM 204 has a complete connectivity map of the fabric, can uniquely identify each device by its serial number, and has offsets to all necessary capabilities. After all devices reachable by FDM 204 have been marked "enumerated," FDM 204 moves on to the next phase of fabric discovery, namely reading the configuration space for a device. During the second phase of fabric discovery, FDM 204 traverses through the list of the devices it obtained in previous phase and sends out PI-4 read packets to read the capabilities at offsets collected during the first phase. If any of the capabilities also reference tables, then FDM 204 reads those tables as well. Relevant information obtained from reading capabilities and tables is stored in configuration records per device in capability database 206. This information may be used during the configuration phase and for run-time services, such as peer-to-peer and multicast connections maintenance. During the last phase of fabric discovery, FDM 204 traverses through the list of the devices and writes data into each device's configuration space to configure the device. This time, FDM 204 sends out PI-4 write packets to update one or more event tables for all devices. When all three phases have been completed and all devices subsequently discovered, FDM 204 constructs a connection table that reflects if two devices are connected in the fabric. The connection table is used every time shortest path between a pair of devices needs to be determined. In addition, FDM 204 constructs a spanning tree to be used for multicast communications.

Numerous specific details may be set forth herein to provide a thorough understanding of the embodiments. It will be understood by those skilled in the art, however, that the embodiments may be practiced without these specific details. In other instances; well-known methods, procedures, components and circuits have not been described in detail so as not to obscure the embodiments. It can be appreciated that the specific structural and functional details disclosed herein may be representative and do not necessarily limit the scope of the embodiments.

It is worthy to note that any reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

All or portions of the embodiments may be implemented using an architecture that may vary in accordance with any number of factors, such as desired computational rate, power levels, heat tolerances, processing cycle budget, input data rates, output data rates, memory resources, data bus speeds and other performance constraints. For example, an embodiment may be implemented using software executed by a processor, as described previously. In another example, an embodiment may be implemented as dedicated hardware, such as a circuit, an application specific integrated circuit (ASIC), Programmable Logic Device (PLD), or digital signal processor (DSP) and accompanying hardware structures. In yet another example, an embodiment may be implemented by any combination of programmed general-purpose computer components and custom hardware components. The embodiments are not limited in this context.

The embodiments may have been described in terms of one or more modules. Although an embodiment has been described in terms of "modules" to facilitate description, one or more circuits, components, registers, processors, software subroutines, or any combination thereof could be substituted for one, several, or all of the modules. The embodiments are not limited in this context.

## Claims

1. A method, comprising:
locating (302) a plurality of devices connected to a fabric;
collecting (304) capability information for each device , said collecting includes determining whether capability information for a device has already been collected and collecting capability information for said device in accordance with said determination by reading a set of capabilities for said device, determining whether there are any reference tables associated with said capabilities and
reading said reference tables;
updating (306) a capability table with said capability information; and
configuring (308) each device with fabric information.

2. The method of claim 1, wherein said collecting (304) comprises collecting capability information for a plurality of devices in parallel.

3. The method of claim 1, further comprising:
detecting that all of said capabilities for said device have been read;
determining whether said device connects to any other devices; and
reading a set of capabilities and associated reference tables for said other devices if said device connects to said other devices.

4. The method of claim1, wherein said configuring (308) comprises configuring at least one capability with said fabric information.

5. The method of claim 1, further comprising:
detecting that capabilities information has been read for all devices connected to said fabric;
creating a connection table for said plurality of devices; and
communicating information between said devices using said fabric and said connection table.

6. The method of claim 1, wherein said collecting and configuring is performed using protocol interface packets as defined by an Advanced Switching Specification.

7. An apparatus (100) comprising:
a plurality of devices;
a communications fabric (104) to connect to said plurality of devices capable of communicating information between said devices; and
a fabric management module (108) to connect to said communications fabric capable of discovering and configuring said devices to communicate said information using said communications fabric, said fabric management module comprises a fabric discovery module (204) to locate said plurality of devices connected to said communications fabric, said fabric discovery module to collect a set of capability information for each device, and to configure each device with fabric information, said collecting includes determining whether capability information for a device has already been collected and collecting capability information for said device in accordance with said determination by reading a set of capabilities for said device, determining whether there are any reference tables associated with said capabilities and reading said reference tables.

8. The apparatus (100) of claim 7, wherein at least one device comprises a single board computer.

9. The apparatus (100) of claim 7, wherein said communications fabric (104) is arranged in accordance with an Advanced Switching Specification.

10. The apparatus (100) of claim 7, wherein said fabric management module (108) comprises a capability database (206) connected to said fabric discovery module (204) for storing a record for each device.

11. The apparatus (100) of claim 7, wherein said fabric discovery module (204) generates a connection table for said plurality of devices, said connection table having a path between each pair of devices connected to said communications fabric.

12. A computer program comprising computer program code means adapted to perform a method as claimed in any of claims 1-6 when run on a computer.

13. A computer readable medium storing a computer program as claimed in claim 12.

## Patentansprüche

1. Verfahren, das folgendes umfasst:
das Lokalisieren (302) einer Mehrzahl von Vorrichtungen, die mit einer Fabric verbunden sind;
das Sammeln (304) von Fähigkeitsinformationen zu jeder Vorrichtung, wobei das genannte Sammeln das Bestimmen aufweist, ob die Fähigkeitsinformationen für eine Vorrichtung bereits gesammelt worden sind, sowie das Sammeln der Fähigkeitsinformationen für die genannte Vorrichtung gemäß der genannten Bestimmung, indem eine Reihe von Fähigkeiten für die genannte Vorrichtung gelesen wird, wobei bestimmt wird, ob Referenztabellen existieren, die den genannten Fähigkeiten zugeordnet sind, und wobei die genannten Referenztabellen gelesen werden;
das Aktualisieren (306) einer Fähigkeitstabelle mit den genannten Fähigkeitsinformationen; und
das Konfigurieren (308) jeder Vorrichtung mit Fabric-Informationen.

2. Verfahren nach Anspruch 1, wobei das genannte Sammeln (304) das parallele Sammeln von Fähigkeitsinformationen für eine Mehrzahl von Vorrichtungen umfasst.

3. Verfahren nach Anspruch 1, wobei dieses ferner folgendes umfasst:
das Detektieren, dass alle genannten Fähigkeiten für die genannte Vorrichtung gelesen worden sind;
das Bestimmen, ob die genannte Vorrichtung eine Verbindung anderen Vorrichtungen vorsieht; und
das Lesen einer Reihe von Fähigkeiten und zugeordneter Referenztabellen für die genannten anderen Vorrichtungen, wenn die genannte Vorrichtung eine Verbindung zu den genannten anderen Vorrichtungen vorsieht.

4. Verfahren nach Anspruch 1, wobei das genannte Konfigurieren (308) das Konfigurieren von mindestens einer Fähigkeit mit den genannten Fabric-Informationen umfasst.

5. Verfahren nach Anspruch 1, wobei dieses ferner folgendes umfasst:
das Detektieren, dass die Fähigkeitsinformationen für alle mit der genannten Fabric verbundenen Vorrichtungen gelesen worden sind;
das Erzeugen einer Verbindungstabelle für die genannte Mehrzahl von Vorrichtungen;
und
das Kommunizieren von Informationen zwischen den genannten Vorrichtungen unter Verwendung der genannten Fabric und der genannten Verbindungstabelle.

6. Verfahren nach Anspruch 1, wobei das genannte Sammeln und Konfigurieren unter Verwendung von Protokollschnittstellenpaketen gemäß der Definition durch eine Advanced Switching Specification ausgeführt werden.

7. Vorrichtung (100), die folgendes umfasst:
eine Mehrzahl von Vorrichtungen;
eine Kommunikations-Fabric (104) zur Verbindung mit der genannten Mehrzahl von Vorrichtungen, wobei die Fabric in der Lage ist, Informationen zwischen den genannten Vorrichtungen zu übertragen; und
ein Fabric-Verwaltungsmodul (108) zur Verbindung mit der genannten Kommunikations-Fabric, wobei das Modul die genannten Vorrichtungen erkennen und konfigurieren kann, um die genannten Informationen unter Verwendung der genannten Kommunikations-Fabric zu kommunizieren, wobei das genannte Fabric-Verwaltungsmodul ein Fabric-Erkennungsmodul (204) zum Lokalisieren der genannten Mehrzahl von Vorrichtungen umfasst, die mit der genannten Kommunikations-Fabric verbunden sind, wobei das genannte Fabric-Erkennungsmodul dazu dient, eine Reihe von Fähigkeitsinformationen für jede Vorrichtung zu sammeln und jede Vorrichtung mit Fabric-Informationen zu konfigurieren, wobei das genannte Sammeln das Bestimmen aufweist, ob die Fähigkeitsinformationen für eine Vorrichtung bereits gesammelt worden sind, und das Sammeln von Fähigkeitsinformationen für die genannte Vorrichtung gemäß der genannten Bestimmung durch Lesen einer Reihe von Fähigkeiten für die genannte Vorrichtung, wobei bestimmt wird, ob den genannten Fähigkeiten Referenztabellen zugeordnet sind, und wobei die genannten Referenztabellen gelesen werden.

8. Vorrichtung (100) nach Anspruch 7, wobei die mindestens eine Vorrichtung einen Computer mit einer einzigen Platine umfasst.

9. Vorrichtung (100) nach Anspruch 7, wobei die genannte Kommunikations-Fabric (104) gemäß einer Advanced Switching Specification angeordnet ist.

10. Vorrichtung (100) nach Anspruch 7, wobei das genannte Fabric-Verwaltungsmodul (108) eine Fähigkeitsdatenbank (206) umfasst, die zum Speichern eines Datensatzes für jede Vorrichtung mit dem genannten Fabric-Erkennungsmodul (204) verbunden ist.

11. Vorrichtung (100) nach Anspruch 7, wobei das genannte Fabric-Erkennungsmodul (204) eine Verbindungstabelle für die genannte Mehrzahl von Vorrichtungen erzeugt, wobei die genannte Verbindungstabelle einen Pfad zwischen jedem mit der genannten Kommunikations-Fabric verbundenen Vorrichtungspaar aufweist.

12. Computerprogramm, das eine Computerprogrammcodeeinrichtung umfasst, die bei einer Ausführung auf einem Computer ein Verfahren nach einem der Ansprüche 1 bis 6 ausführen kann.

13. Computerlesbares Medium, das ein Computerprogramm nach Anspruch 12 speichert.

## Revendications

1. Procédé, comprenant les étapes consistant à :
localiser (302) une pluralité de dispositifs connectés à un tissu ;
collecter (304) des informations de capacité pour chaque dispositif, ladite collecte comprenant les étapes consistant à déterminer si les informations de capacité pour un dispositif ont déjà été collectées et à collecter les informations de capacité pour ledit dispositif conformément à ladite détermination en lisant un jeu de capacités pour ledit dispositif, à déterminer si des tables de référence sont associées auxdites capacités et à lire lesdites tables de référence ;
mettre à jour (306) une table de capacités avec lesdites informations de capacité ; et
configurer (308) chaque dispositif avec des informations de tissu.

2. Procédé selon la revendication 1, dans lequel ladite collecte (304) comprend l'étape consistant à collecter des informations de capacité pour une pluralité de dispositifs en parallèle.

3. Procédé selon la revendication 1, comprenant en outre les étapes consistant à :
détecter que toutes lesdites capacités pour ledit dispositif ont été lues ;
déterminer si ledit dispositif se connecte à d'autres dispositifs ; et
lire un jeu de capacités et de tables de référence associées pour lesdits autres dispositifs si ledit dispositif se connecte auxdits autres dispositifs.

4. Procédé selon la revendication 1, dans lequel ladite configuration (308) comprend l'étape consistant à configurer au moins une capacité avec lesdites informations de tissu.

5. Procédé selon la revendication 1, comprenant en outre les étapes consistant à :
détecter que des informations des capacités ont été lues pour tous les dispositifs connectés audit tissu ;
créer une table de connexion pour ladite pluralité de dispositifs ; et
communiquer des informations entre lesdits dispositifs utilisant ledit tissu et ladite table de connexion.

6. Procédé selon la revendication 1, dans lequel lesdites collecte et configuration sont effectuées en utilisant des paquets d'interface de protocole tels que définis par une Spécification de commutation avancée.

7. Appareil (100) comprenant :
une pluralité de dispositifs ;
un tissu de communication (104) à connecter à ladite pluralité de dispositifs capables de communiquer des informations entre lesdits dispositifs ; et
un module de gestion de tissu (108) à connecter audit tissu de communication capable de découvrir et de configurer lesdits dispositifs pour communiquer lesdites informations en utilisant ledit tissu de communication, ledit module de gestion de tissu comprenant un module de découverte de tissu (204) pour localiser ladite pluralité de dispositifs connectés audit tissu de communication, ledit module de découverte de tissu devant collecter un jeu d'informations de capacité pour chaque dispositif et configurer chaque dispositif avec des informations de tissu, ladite collecte comprenant la détermination du fait que des informations de capacité pour un dispositif ont déjà été collectées et la collecte d'informations de capacité pour ledit dispositif conformément à ladite détermination en lisant un jeu de capacités pour ledit dispositif, la détermination du fait qu'il existe des tables de référence associées auxdites capacités et la lecture desdites tables de référence.

8. Appareil (100) selon la revendication 7, dans lequel au moins un dispositif comprend un ordinateur de bord unique.

9. Appareil (100) selon la revendication 7, dans lequel ledit tissu de communication (104) est agencé conformément à une Spécification de commutation avancée.

10. Appareil (100) selon la revendication 7, dans lequel ledit module de gestion de tissu (108) comprend une base de données de capacités (206) connectée audit module de découverte de tissu (204) pour stocker un enregistrement pour chaque dispositif.

11. Appareil (100) selon la revendication 7, dans lequel ledit module de découverte de tissu (204) génère une table de connexion pour ladite pluralité de dispositifs, ladite table de connexion ayant un chemin entre chaque paire de dispositifs connectés audit tissu de communication.

12. Programme informatique comprenant des moyens de code de programme informatique adaptés pour effectuer un procédé selon l'une quelconque des revendications 1 à 6 lorsqu'il est exécuté sur un ordinateur.

13. Support lisible par ordinateur stockant un programme informatique selon la revendication 12.
